# EUROPÄISCHE PATENTSCHRIFT

(11) **EP 1 839 927 B1**
(45) Veröffentlichungstag und Bekanntmachung des Hinweises auf die Patenterteilung: **03.06.2009**
(21) Anmeldenummer: 07004635.4
(22) Anmeldetag: 07.03.2007
(51) Int. Cl.: B60K 17/346

(54) **Antriebsvorrichtung für allradgetriebene Kraftfahrzeuge**
Drivetrain for all-wheel drive motor vehicles
Dispositif de propulsion pour véhicule automobile commandé par les quatre roues

(30) Priorität: 31.03.2006 DE 102006014932
(43) Veröffentlichungstag der Anmeldung: 03.10.2007
(73) Patentinhaber: AUDI AG, 85045 Ingolstadt (DE)
(72) Erfinder: Märkl, Johann, 85049 Ingolstadt (DE)
(74) Vertreter: Lehle, Josef

(56) Entgegenhaltungen:
- EP-A- 0 352 994
- WO-A-20/05098278
- JP-A- 4 005 132
- JP-A- 60 001 030
- JP-A- 2004 122 880
- US-A- 5 234 091

## Beschreibung

Die Erfindung betrifft eine Antriebsvorrichtung für allradgetriebene Kraftfahrzeuge gemäß dem Oberbegriff des Patentanspruches 1.

Eine sehr kompakt bauende Antriebsvorrichtung beschreibt die DE 103 15 181 A1, bei der zwei axial benachbarte Planetenradgetriebe als Achsdifferenzial und als Zwischenachsdifferenzial im Quereinbau an einem frontseitigen Antriebsaggregat des Kraftfahrzeuges verwendet sind. Damit können aber nur konstruktiv fest vorgegebene Antriebsmomentenverteilungen auf die Achsdifferenziale verwirklicht werden.

Die US 5 234 091 zeigt eine Antriebsvorrichtung nach dem Oberbegriff des Anspruchs 1.

Aufgabe der Erfindung ist es, eine Antriebsvorrichtung der gattungsgemäßen Art vorzuschlagen, mit der ebenfalls baulich besonders kompakt und insbesondere für den Quereinbau in Kraftfahrzeugen geeignet variable Antriebsmomentenverteilungen erzielbar sind.

Diese Aufgabe wird erfindungsgemäß mit den kennzeichnenden Merkmalen des Patentanspruches 1 gelöst. Vorteilhafte Weiterbildungen und alternative Ausgestaltungen der Erfindung beschreiben die weiteren Patentansprüche.

gemäß der Erfindung gelingt es, mit getriebetechnisch und baulich relativ geringem Aufwand sowohl die Differenzialfunktion eines Zwischenachsdifferenziales als auch eine voll variable Antriebsmomentenverteilung von 100% Frontantrieb bis zu 100% Heckantrieb des Kraftfahrzeuges zu verwirklichen. Die Steuerung der Momentenverteilung kann hydraulisch oder elektromechanisch unter Einbeziehung eines elektronischen Motor-und Getriebemanagements stufenlos erfolgen.

Baulich besonders kompakt können die Lamellenkupplungen im Wesentlichen in einer einheitlichen Rotationsebene mit dem Achsdifferenzial angeordnet sein, so dass gegebenenfalls einheitliche Getriebegehäuse und andere Antriebsbauteile gleichsam verwendbar sind, also auch für Bautypen des Kraftfahrzeuges ohne Allradantrieb.

Die Lamellenkupplungen können bevorzugt sowohl radial innerhalb des Achsdifferenziales als auch radial außerhalb des Achsdifferenziales positioniert sein, wodurch eine axial besonders kurz bauende Konstruktion mit beispielsweise im Gehäuse des Wechselgetriebes des Kraftfahrzeuges integrierbarer Antriebsvorrichtung möglich ist.

Besonders vorteilhaft können die Lamellen der beiden Lamellenkupplungen in einem gemeinsamen äußeren und angetriebenen Gehäuse positioniert sein, wobei zwei radial innere Abtriebshülsen fest mit dem Ausgleichsgehäuse des Achsdifferenziales bzw. einem außerhalb des Gehäuses liegenden Abtriebszahnrad zum Antrieb des zweiten Achsdifferenziales verbunden sind.

Ferner können in dem äußeren Gehäuse zumindest ein Ringkolben zum Anpressen der Lamellen der Lamellenkupplungen axial verschiebbar gelagert und hydraulisch oder elektromechanisch betätigbar sein. Bevorzugt sollten zwei hydraulische oder elektromechanische Betätigungselemente vorgesehen sein, die eine variable Steuerung des Übertragungsmomentes beider Kupplungen ermöglichen; die Lamellenkupplungen könnten dann sogar die Funktion einer Kraftfahrzeug-Anfahrkupplung übernehmen.

Eine besonders kompakt bauende Konstruktion der Antriebsvorrichtung ist dann erzielbar, wenn das innerhalb der beiden Lamellenkupplungen positionierte Achsdifferenzial ein Kegelraddifferenzial ist. Grundsätzlich wäre hier aber auch der Einsatz eines Kronraddifferenzials möglich.

Ein verminderter Steuerungsaufwand der Lamellenkupplungen ist erzielbar, wenn die eine Lamellenkupplung mittels zumindest einer Feder zur Übertragung eines Mindestantriebsmomentes federnd vorgespannt ist. Damit ist auch sichergestellt, dass bei einem Ausfall der Kupplungsbetätigung eine Mindest-Antriebsübertragung über ein Achsdifferenzial des Kraftfahrzeuges stets erhalten bleibt.

Getriebetechnisch günstig können das Ausgleichsgehäuse des Kegelraddifferenziales und die Abtriebshülse der einen Lamellenkupplung im äußeren Gehäuse der Lamellenkupplungen drehbar gelagert sein.

Eine baulich und fertigungstechnisch besonders vorteilhafte Ausgestaltung der Erfindung sieht vor, dass das Achsdifferenzial ein Kronraddifferenzial ist, dessen Planetenräder radial außerhalb des Kupplungsgehäuses mit an Abtriebsflanschen ausgebildeten Kronzahnrädern kämmen. Die Lamellenkupplungen liegen somit innerhalb des Achsdifferenziales und sind technisch mit geringem Aufwand ansteuerbar.

Dabei können die Abtriebsflansche einander unmittelbar benachbart angeordnet sein, wobei deren die Kronzahnräder tragende Ringkragen radial übereinander ausgerichtet sind und der äußere Ringkragen den inneren Ringkragen derart überragt, dass diametral gegenüberliegende Zahneingriffe an den Planetenrädern erzielt sind. Dies ermöglicht u. a. eine konstruktiv und baulich besonders vorteilhafte "Ineinanderschachtelung" der Differenzialbauteile.

Fertigungstechnisch günstig kann ferner das die Planetenräder tragende Ausgleichsgehäuse des Kronraddifferenziales einerseits um das innenliegende Gehäuse der Lamellenkupplungen herumgeführt und mit der einen Abtriebshülse der Lamellenkupplungen fest verbunden sein. Die zweite Abtriebshülse der Lamellenkupplungen kann einen aus dem Gehäuse herausgeführten Abschnitt im wesentlichen gleichen Durchmessers aufweisen, der mit dem Abtriebszahnrad zum Antrieb des zweiten Achsdifferenziales fest verbunden ist.

Des weiteren können die Abtriebsflansche des Kronraddifferenziales radial und/oder axial über Gleitlagerbereiche aneinander derart anlaufen, dass bei Relativdrehzahlen eine viskose Sperrwirkung auftritt. Dies ermöglicht mit fertigungstechnisch geringem Aufwand die zusätzliche Funktion eines Sperrdifferenziales als Achsdifferenzial.

Schließlich kann baulich günstig das mit dem radial innenliegenden Gehäuse der Lamellenkupplungen fest verbundene Antriebszahnrad topfförmig ausgebildet und derart angeordnet sein, dass die Ausgleichsräder des Kronraddifferenziales im wesentlichen innerhalb des Antriebszahnrades liegen.

Gemäß einer weiteren alternativen Ausführungsform können die Lamellen der Lamellenkupplungen in Achsrichtung gesehen auch neben dem Achsdifferenzial angeordnet sein, wobei das Achsdifferenzial hier als Bauraumgründen dann bevorzugt ein Planetenraddifferenzial oder durch ein bevorzugt schmal bauendes Kronraddifferenzial gebildet ist. Auch hier können die Lamellen der Lamellenkupplungen wiederum bevorzugt in einem gemeinsamen Gehäuse angeordnet sein, wobei zwei ebenfalls wiederum vorzugsweise stirnseitig mit einem Spaltabstand aneinandergrenzende, radial innere Abtriebshülsen vorgesehen sind, von denen eine mit dem Planetenrad-oder Kronraddifferenzial und die andere bevorzugt mit einem außerhalb des Gehäuses liegenden Abtriebszahnrad zum Antrieb des zweiten Achsdifferenzials verbunden ist.

Zur Betätigung der Lamellenkupplungen ist vorzugsweise eine hydraulisch oder elektromechanisch betätigbare Anpressvorrichtung vorgesehen. Diese Kupplungsbetätigungsvorrichtung weist in einer vorteilhaften Ausgestaltung Mittel auf, die bei einer Betätigung der Kupplungsbetätigungsvorrichtung ein Federelement einer ersten Kupplung, mit der diese zur Übertragung eines Mindestabtriebsmomentes federnd vorgespannt ist, zurückdrückt. Dadurch wird die Kupplung in einer vorgegebenen Weise geöffnet, während durch die Betätigung der Kupplungsbetätigungsvorrichtung gleichzeitig die zweite Kupplung in vorgegebener Weise schließt. Als derartige kraftübertragende Mittel können beispielsweise Stifte im Bereich der Lamellenverzahnung vorgesehen sein. Die Kupplungsbetätigungsvorrichtung kann dabei grundsätzlich innerhalb des die Lamellenkupplungen aufnehmenden Gehäuse oder aber auch außerhalb dieses Gehäuses angeordnet sein. Für eine außerhalb des Gehäuses liegende Anordnung ist vorzugsweise eine Wälzlageranordnung vorzusehen, die mit einer Hebel- und/oder Rampenscheibenanordnung zusammenwirkt und mit der eine Verlustreduzierung des Ausrücklagers erzielt werden kann, da wegen des Hebels die Lagerkraft kleiner als die Kupplungsanpresskraft ist. Für eine im Gehäuse liegende Kupplungsbetätigungsvorrichtung wird dagegen ein z. B. hydraulisch oder elektromechanisch betätigbarer Ringkolben vorgeschlagen.

Drei Ausführungsbeispiele der Erfindung sind im folgenden mit weiteren Einzelheiten näher erläutert. Die schematische Zeichnung zeigt in:
- Fig. 1: eine Antriebsvorrichtung für allradgetriebene Kraftfahrzeuge mit einem Kegelraddifferenzial als Achsdifferenzial und zwei radial außenliegenden Lamellenkupplungen als Zwischenachsdifferenzial,
- Fig. 2: eine weitere, alternative Antriebsvorrichtung mit einem Kronraddifferenzial und radial innenliegenden Lamellenkupplungen, und
- Fig. 3: eine weitere, alternative Antriebsvorrichtung mit neben einem Plantetenraddifferenzial angeordneten Lamellenkupplungen.

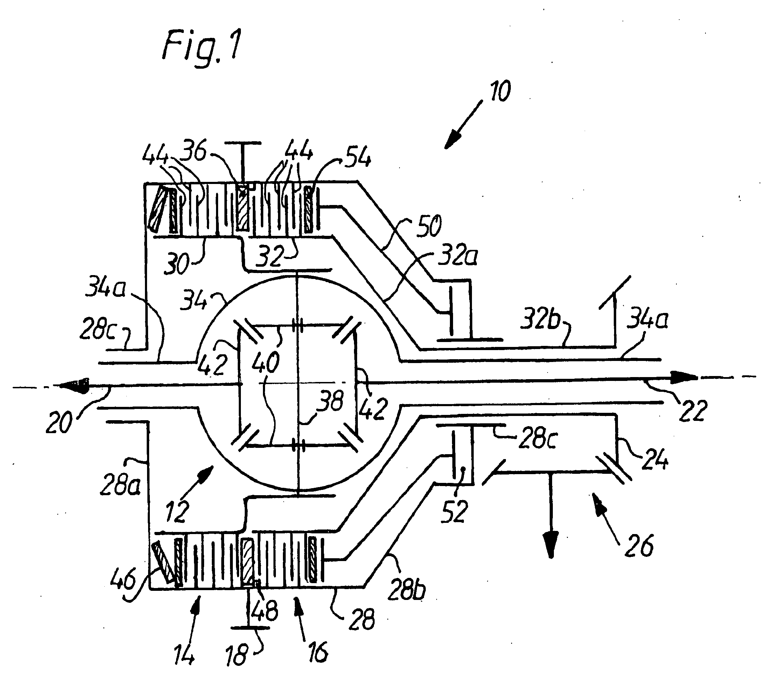

In der Fig. 1 ist grob schematisch eine Antriebsvorrichtung 10 mit einem Kegelrad-Achsdifferenzial 12 und zwei als Zwischenachsdifferenzial wirkenden Lamellenkupplungen 14, 16 dargestellt.

Die in noch zu beschreibender Weise zu einer Montageeinheit zusammengebaute Antriebsvorrichtung 10 ist drehbar in einem nicht dargestellten Getriebegehäuse gelagert und weist ein Antriebszahnrad 18 auf, das mit einem nicht dargestellten Abtriebszahnrad eines Geschwindigkeits-Wechselgetriebes eines allradgetriebenen Kraftfahrzeuges kämmt.

Die im Quereinbau an einem frontseitigen Antriebsaggregat (Brennkraftmaschine plus Wechselgetriebe plus Antriebsvorrichtung 10) angebaute Antriebsvorrichtung 10 weist abtriebsseitig zwei Achshalbwellen 20, 22 und ein Abtriebszahnrad 24 als Teil eines Kegeltriebes 26 auf.

Die Achshalbwellen 20, 22 sind in bekannter Weise (nicht dargestellt) mit Antriebswellen zum Antrieb der Vorderräder des Kraftfahrzeuges verbunden.

Über den Kegeltrieb 26 und eine nicht dargestellte Kardanwelle werden das hintere Achsdifferenzial des Kraftfahrzeuges bzw. dessen Hinterräder angetrieben.

Die beiden Lamellenkupplungen 14, 16 sind in einem gemeinsamen, trommelförmigen Gehäuse 28 vorgesehen, das an seinen Stirnwänden 28a, 28b hülsenförmige Lagerabschnitte 28c aufweist, über die es in dem nicht dargestellten Getriebegehäuse und unter Zwischenschaltung von Wälzlagern drehbar gelagert ist.

Innerhalb des Gehäuses 28 sind eine ringförmige Abtriebshülse 30 als Funktionsteil der Lamellenkupplung 14 und eine ringförmige Abtriebshülse 32 als Funktionsteil der axial unmittelbar benachbarten Lamellenkupplung 16 vorgesehen.

Die Abtriebshülse 32 ist mit einem konisch sich verjüngendem Abschnitt 32a und einem zylindrischen Abschnitt 32b aus dem Gehäuse 28 herausgeführt und trägt wie ersichtlich das Abtriebszahnrad 24 des Kegeltriebes 26.

Ferner ist die Abtriebshülse 30 mit dem Ausgleichsgehäuse 34 des radial innerhalb der Lamellenkupplungen 14, 16 liegenden Achsdifferenziales 12 fest verbunden, wobei das Antriebszahnrad 18, die die beiden Lamellenkupplungen 14, 16 trennende, mittlere Anpressplatte 36 der Lamellenkupplungen 14, 16 und der Mitnehmerbolzen 38 des Achsdifferenziales 12 im wesentlichen in einer einheitlichen Rotationsmittelebene liegen.

Innerhalb des Ausgleichsgehäuses 34 sind in bekannter Weise die miteinander kämmenden Kegelräder 40, 42 angeordnet, wobei die als Planetenräder dienenden Kegelräder 40 auf dem Mitnehmerbolzen 38 drehbar gelagert sind, während die Achskegelräder 42 trieblich mit den Achshalbwellen 20, 22 verbunden sind. Das Ausgleichsgehäuse 34 ist mit der fest angeordneten Abtriebshülse 30 auf der linken Seite der Zeichnung drehbar in der Lagerhülse 28c des Gehäuses 28 und rechtsseitig innerhalb der Abtriebshülse 32 bzw. deren zylindrischen Abschnittes 32b über angeformte Lagerhälse 34a gelagert (als Gleitlagerungen, da hier in der Regel nur geringe Drehzahldifferenzen auftreten). Innerhalb der Lagerhälse 34a wiederum sind die Achshalbwellen 20, 22 drehbar gelagert.

Die allgemein mit 44 bezeichneten Lamellen der Lamellenkupplungen 14, 16 sind wie bekannt alternierend über entsprechende Verzahnungen mit dem Gehäuse 28 einerseits und den Abtriebshülsen 30, 32 andererseits trieblich verbunden, so dass durch Anpressen der Lamellen 44 eine zunehmende Drehmomentübertragung stattfindet.

Die Lamellenkupplung 14 ist dabei wie ersichtlich mittels einer ringförmigen Tellerfeder 46 federnd vorgespannt, so dass ein definiertes Grunddrehmoment auf die Abtriebshülse 30 übertragbar ist. Die Lamellen 44 sind dabei an der mittleren Anpressplatte 36 abgestützt, die rechtsseitig an einem in eine Nut eingesprengten Federring 48 anliegt.

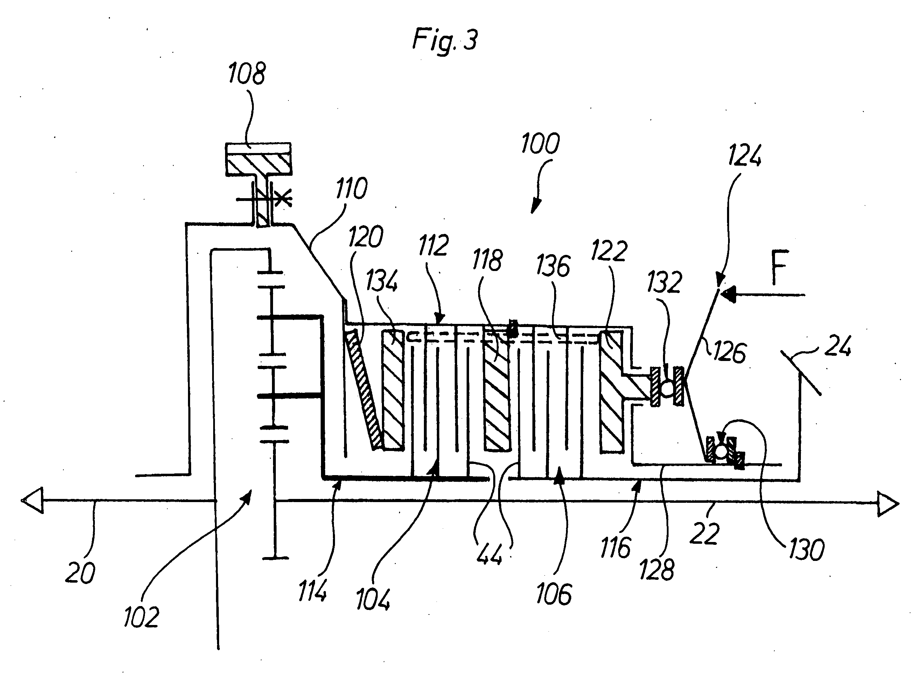

Die gesteuerte Anpressung der Lamellen 44 beider Lamellenkupplungen 14, 16 erfolgt mittels eines Ringkolbens 50, der auf der rechtsseitigen Lagerhülse 28c des Gehäuses 28 axial verschiebbar geführt ist und der mit dem Gehäuse 28 eine mit Hydraulikflüssigkeit beaufschlagbare Hydraulikkammer 52 begrenzt. Durch geeignete Druckbeaufschlagung können somit die Lamellenkupplungen 14, 16 stufenlos in ihrer Drehmomentübertragung verändert werden, wobei der Ringkolben 50 wie ersichtlich die äußere Anpressplatte 54 der Lamellenkupplung 16 beaufschlagt und über in der Lamellenverzahnung des Gehäuses 28 liegende Stifte (analog zu der nachfolgend noch näher beschriebenen Fig. 3) die Tellerfeder der Kupplung 14 zurückdrückt und damit die Kupplung 14 in dem Maße öffnet, wie die Kupplung 16 schließt.

In Abänderung der dargestellten Betätigung der Lamellenkupplungen 14, 16 kann z. B. an Stelle der Tellerfeder 46 (oder zusätzlich) ein zweiter Ringkolben vorgesehen sein, der eine von der Lamellenkupplung 16 unabhängige Steuerung der Lamellenkupplung 14 ermöglicht. Die Anpressung der Lamellenkupplungen kann alternativ auch mittels geeigneter axialer Wälzlager über eine außerhalb des Differenzialgehäuses 28 angebrachte hydraulische oder mechanische Betätigungseinrichtung erfolgen.

Die Steuerung der Lamellenkupplungen 14, 16 kann abhängig von Anfahrbedingungen und von fahrdynamischen Situationen des Kraftfahrzeuges gesteuert werden, gegebenenfalls unter Einbeziehung und Adaption eines elektronischen Fahrstabilitätsprogrammes des Kraftfahrzeuges.

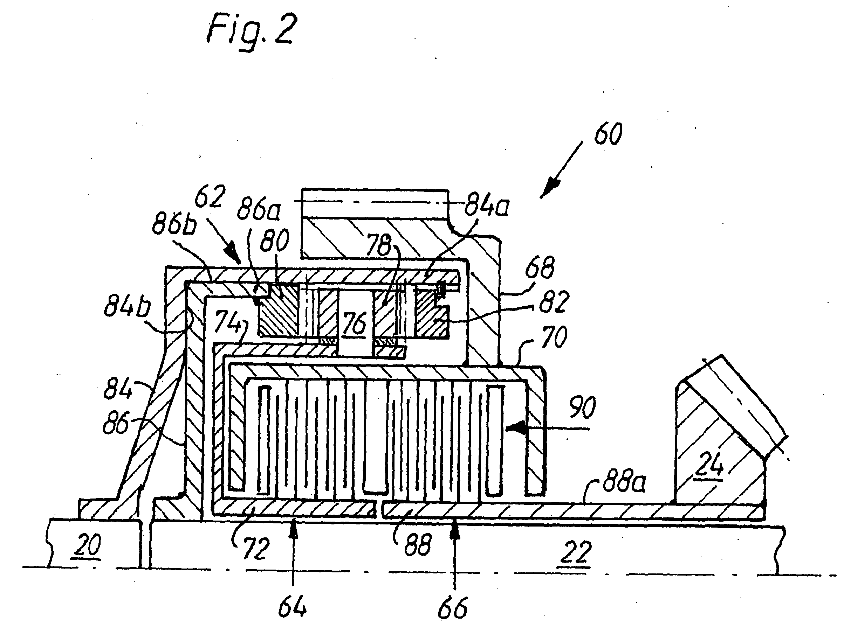

Die Fig. 2 zeigt eine alternative Antriebsvorrichtung 60, die ebenfalls im Quereinbau an einem frontseitigem Antriebsaggregat in einem nicht dargestelltem Getriebegehäuse angeordnet und drehbar gelagert ist. Auf der Zeichnung ist nur die obere Hälfte der Antriebsvorrichtung 60 dargestellt, die untere Hälfte ist sich spiegelbildlich gleich vorzustellen. Ferner ist die Antriebsvorrichtung 60 nur soweit beschrieben, als sie sich wesentlich von der Fig. 1 unterscheidet. Funktionell gleiche Teile sind mit gleichen Bezugszeichen versehen.

Die Antriebsvorrichtung 60 weist ein als Kronraddifferenzial ausgeführtes Achsdifferenzial 62 und zwei als Zwischenachsdifferenzial wirkende Lamellenkupplungen 64, 66 auf. Der Antrieb der Antriebsvorrichtung 60 erfolgt mittels eines topfförmig ausgebildeten Antriebszahnrades 68, das wie vorbeschrieben mit einem Abtriebszahnrad des Wechselgetriebes des Kraftfahrzeuges kämmt.

Die beiden Lamellenkupplungen 64, 66, die funktionell wie zur Fig. 1 beschrieben ausgeführt sein können, sind radial innerhalb des Achsdifferenziales 62 angeordnet. Dabei ist das mit dem äußeren Gehäuse 70 der Lamellenkupplungen 64, 66 fest verbundene Antriebszahnrad 68 so angeordnet, dass es wie ersichtlich im wesentlichen in einer Rotationsmittelebene mit dem Achsdifferenzial 62 und den Lamellenkupplungen 64, 66 liegt.

Dazu ist die radial innenliegende Abtriebshülse 72 fest mit dem topfförmig ausgeführten, um die Lamellenkupplung 64 herum geführten Planetenradträger 74 des Kronraddifferenziales 62 fest verbunden. Der Planetenradträger 74 trägt über mehrere, über dessen Umfang verteilte Lagerbolzen 76 drehbar gelagerte Planetenräder 78, die mit beiderseits der Planetenräder 78 angeordneten, ringförmigen Kronzahnrädern 80, 82 kämmen.

Die Kronzahnräder 80, 82 sind mit Ringkragen 84a, 86a von Abtriebsflanschen 84, 86 fest verbunden, welche Abtriebsflansche 84, 86 trieblich mit den Achshalbwellen 20, 22 des Achsdifferenziales 62 verbunden sind.

Dabei überragt der Ringkragen 84a des einen Abtriebsflansches 84 den Ringkragen 86a des anderen Abtriebsflansches 86 derart, dass bei entsprechend einander zugewandten Verzahnungen der Kronzahnräder 80, 82 deren Zahneingriffe mit den Planetenrädern 78 diametral gegenüberliegen. Ferner ragen die besagten Ringkragen 84a, 86a wie ersichtlich in den ringförmigen Freiraum des topfförmig geformten Antriebszahnrades 68 ein.

Die Abtriebshülse 88 der Lamellenkupplung 66 weist einen aus dem Gehäuse 70 herausgeführten Abschnitt 88a gleichen Durchmessers auf, der mit dem Abtriebszahnrad 24 zum Antrieb des zweiten Achsdifferenziales fest verbunden ist.

Ferner laufen die einander unmittelbar benachbarten Abtriebsflansche 84, 86 des Kronraddifferenziales 62 radial und axial über Gleitlagerbereiche 84b, 86b aneinander derart mit geringem Lagerspiel an, dass bei Relativdrehzahlen eine durch das vorhandene Schmiermittel bewirkte, viskose Sperrwirkung auftritt und somit das Kronraddifferenzial bzw. Achsdifferenzial 62 zumindest in begrenztem Umfang als Sperrdifferenzial wirkt.

Die Betätigung und Funktion der Lamellenkupplungen 64, 66 kann wie vorbeschrieben zu den Lamellenkupplungen 14, 16 über eine oder zwei Vorrichtungen (nur durch den Pfeil 90 angedeutet) erfolgen.

Über die Lamellenkupplungen 64, 66 kann somit wiederum das Abtriebsmoment durch entsprechende Betätigung der Lamellenkupplungen 64, 66 auf das Achsdifferenzial 62 und/oder auf das Abtriebszahnrad 24 verteilt werden.

Ferner ist über die Ausgleichsfunktion des Achsdifferenziales 62 (zumindest eine Lamellenkupplung 64 und/oder 66 ist im Schlupfbetrieb) ein gleichmäßiger Antrieb der Vorderräder des Kraftfahrzeuges über die Achshalbwellen 20, 22 auch beim Durchfahren von Kurven in bekannter Weise gegeben. Bei auftretenden Drehzahldifferenzen z. B. aufgrund des Durchdrehens eines Vorderrades kann zugleich eine Sperrwirkung zum verstärkten Antrieb des zweiten Vorderrades erzeugt werden.

Die Erfindung ist nicht auf die eben dargestellten Ausführungsbeispiele beschränkt. Anstelle eines Kegelraddifferenziales 12 oder des Kronenraddifferenziales 62 kann auch ein Planetenraddifferenzial verwendet sein. Die Betätigung der Lamellenkupplungen 14, 16 bzw. 64, 66 kann auch elektromagnetisch bewirkt sein. Die Anordnung der besagten Lamellenkupplungen kann auch axial unmittelbar neben dem Achsdifferenzial 12 bzw. 62 sein.

In der Fig. 3 ist schematisch eine weitere alternative Ausführungsform einer Antriebsvorrichtung 100 mit einem Planetenraddifferenzial 102 und zwei als Zwischenachsdifferenzial wirkenden Lamellenkupplungen 104, 106 dargestellt.

Die Antriebsvorrichtung weist abtriebsseitig zwei Achshalbwellen 20, 22 auf, die wiederum in bekannter Weise mit Antriebswellen zum Antrieb der Vorderräder des Kraftfahrzeugs verbunden sind.

Die Antriebsvorrichtung 100 ist auch hier wiederum drehbar in einem Getriebegehäuse gelagert und weist ein Antriebszahnrad 108 auf, das mit einem nicht dargestellten Abtriebszahnrad eines Geschwindigkeits-Wechselgetriebes eines allradgetrieben Kraftfahrzeugs kämmen kann. Das Antriebszahnrad 108 ist mit einem Gehäuseabschnitt 110, in dem das Planetenraddifferenzial 102 im wesentlichen aufgenommen ist, drehfest verbunden. An diesem Gehäuseabschnitt 110 ist ein äußeres, die Lamellenkupplungen 104, 106 aufnehmendes Gehäuse 112 angeschlossen. Die wiederum allgemein mit 44 bezeichneten Lamellen der Lamellenkupplungen 104, 106 sind alternierend über entsprechende Verzahnungen mit dem Gehäuse 112 einerseits und Abtriebshülsen 114, 116 andererseits trieblich verbunden, so dass durch Anpressen der Lamellen 44, eine zunehmende Drehmomentübertragung stattfindet. Die Abtriebshülse 116 ist ringförmig ausgeführt und bildet ein Funktionsteil der Lamellenkupplung 106, während die Bestandteil des Planetenraddifferenzials 102 bildende, ringförmige Abtriebshülse 114 ein Funktionsteil der Lamellenkupplung 104 bildet. Die beiden Abtriebshülsen 114, 116 sind einander axial unmittelbar benachbart angeordnet.

Die Abtriebshülse 116 ist auch hier wiederum aus dem Gehäuse 112 herausgeführt und trägt das Abtriebszahnrad 24 eines hier nicht im Detail dargestellten und lediglich beispielhaft gewählten Kegeltriebes.

Die beiden Lamellenkupplungen 104, 106 sind auch hier wiederum über eine mittlere Anpressplatte 118 voneinander getrennt.

Die Lamellenkupplung 114 ist hier wiederum mit einer Tellerfeder 120 federnd vorgespannt, so dass ein definiertes Grunddrehmoment auf die Abtriebshülse 114 übertragen werden kann. Die gesteuerte Anpressung der Lamellen 44 beider Lamellenkupplungen 104, 106 erfolgt mittels eines Ringkolbens 122, der axial verschiebbar in dem Gehäuse 112 geführt ist und von außerhalb des Gehäuses mittels einer externen hydraulischen oder elektromechanischen Kupplungsbetätigungsvorrichtung 124 betätigt werden kann. Diese Kupplungsbetätigungsvorrichtung 124 umfasst einen Betätigungshebel 126, der mit einem Ende an einem an einem Axialabschnitt 128 des Gehäuses 112 festgelegten und gesicherten Wälzlager 130 abgestützt ist. Ferner stützt sich der Betätigungshebel 126 auch noch über ein zweites Wälzlager 132 an dem Ringkolben 122 ab. Durch geeignete Druckbeaufschlagung entsprechend dem Kraftpfeil F können somit die Lamellenkupplungen 104, 106 stufenlos in ihrer Drehmomentübertragung verändert werden, wobei der Ringkolben 122 in seiner Doppelfunktion als äußere Anpressplatte die Lamellen 44 der Lamellenkupplung 106 beaufschlagt. Dabei wird über in der Lamellenverzahnung des Gehäuses 112 liegende Stifte 136, von denen hier lediglich einer beispielhaft und schematisch dargestellt ist und die sich zwischen der Anpressplatte 134 und dem Ringkolben 122 erstrecken, die Tellerfeder 120 der Kupplung 104 zurückgedrückt, wodurch sich die Kupplung 104 in einem solchen vorgegebenen Maße öffnet, wie sich die Kupplung 106 vorgegebenermaßen schließt.

Auch hier kann wiederum in Abänderung der dargestellten Betätigung der Lamellenkupplungen 104, 106 z. B. eine der zuvor beschriebenen Betätigungsvorrichtungen sowohl für die eine als auch für die andere bzw. auch für beide Kupplungen eingesetzt werden.

## Patentansprüche

1. Antriebsvorrichtung für allradgetriebene Kraftfahrzeuge, mit einem ersten Achsdifferenzial, einem zweiten Achsdifferenzial und einem Zwischenachsdifferenzial, über das das Antriebsmoment auf die Achsdifferenziale verteilbar ist, wobei das eine Achsdifferenzial und das Zwischenachsdifferenzial zu einer Montageeinheit zusammen gebaut sind und das Zwischenachsdifferenzial durch zwei einander benachbarte Lamellenkupplungen (14, 16; 64, 66; 104, 106) gebildet ist, deren Übertragungsmoment variabel steuerbar ist, **dadurch gekennzeichnet, dass** das eine Achsdifferenzial und die zwei Lamellenkupplungen (14, 16; 64, 66; 104, 106) koaxial zueinander angeordnet sind.

2. Antriebsvorrichtung nach Anspruch 1, **dadurch gekennzeichnet, dass** die Lamellenkupplung (14, 16; 64, 66) im wesentlichen in einer einheitlichen Rotationsebene mit dem Achsdifferenzial (12; 62) angeordnet ist.

3. Antriebsvorrichtung nach den Ansprüchen 1 und 2, **dadurch gekennzeichnet, dass** die Lamellenkupplungen (64, 66) radial innerhalb des Achsdifferenziales (62) angeordnet sind.

4. Antriebsvorrichtung nach einem der vorhergehenden Ansprüche, **dadurch gekennzeichnet, dass** das Achsdifferenzial (62) ein Kronraddifferenzial ist, dessen Planetenräder (78) radial außerhalb des Kupplungsgehäuses (70) mit an Abtriebsflanschen (84, 86) ausgebildeten Kronzahnrädern (80, 82) kämmen.

5. Antriebsvorrichtung nach Anspruch 4, **dadurch gekennzeichnet, dass** die Abtriebsflansche (84, 86) einander unmittelbar benachbart angeordnet sind, wobei deren die Kronzahnräder (80, 82) tragende Ringkragen (84a, 86a) radial übereinander ausgerichtet sind und der äußere Ringkragen (84a) den inneren Ringkragen (86a) derart überragt, dass diametral gegenüberliegende Zahneingriffe an den Planetenrädern (78) erzielt sind.

6. Antriebsvorrichtung nach Anspruch 4 oder Anspruch 5, **dadurch gekennzeichnet, dass** die Lamellen (44) der beiden Lamellenkupplungen (64, 66) in einem gemeinsamen äußeren und angetriebenen Gehäuse (70) positioniert sind und dass zwei radial innere Abtriebshülsen (72, 88) als Lamellenträger vorgesehen sind, von denen eine fest mit dem Ausgleichsgehäuse (74) des Achsdifferenziales (62) und die andere mit einem außerhalb des Gehäuses (70) liegendem Abtriebszahnrad (24) zum Antrieb des zweiten Achsdifferenziales verbunden ist.

7. Antriebsvorrichtung nach Anspruch 6, **dadurch gekennzeichnet, dass** der die Planetenräder (78) aufnehmende Planetenradträger (74) des Kronraddifferenziales (62) einerseits um das innenliegende Gehäuse (70) der Lamellenkupplungen (64, 66) herumgeführt ist und mit der einen Abtriebshülse (72) der Lamellenkupplungen (64, 66) fest verbunden ist.

8. Antriebsvorrichtung nach Anspruch 6 oder Anspruch 7, **dadurch gekennzeichnet, dass** die zweite Abtriebshülse (88) der Lamellenkupplungen (64, 66) einen aus dem Gehäuse (70) herausgeführten Abschnitt (88a) gleichen Durchmessers aufweist, der mit dem Abtriebszahnrad (24) zum Antrieb des zweiten Achsdifferenziales fest verbunden ist.

9. Antriebsvorrichtung nach einem der Ansprüche 4 bis 8, **dadurch gekennzeichnet, dass** die Abtriebsflansche (84, 86) des Kronraddifferenziales (62) radial und/oder axial über Gleitlagerbereiche (84b, 86b) aneinander derart anlaufen, dass bei Relativdrehzahlen eine viskose Sperrwirkung auftritt.

10. Antriebsvorrichtung nach einem der Ansprüche 6 bis 9, **dadurch gekennzeichnet, dass** das mit dem radial innenliegenden Gehäuse (70) der Lamellenkupplungen (64, 66) fest verbundene Antriebszahnrad (68) topfförmig ausgebildet und derart angeordnet ist, dass die Planetenräder (78) des Kronraddifferenziales (62) im Wesentlichen innerhalb des Antriebszahnrades (68) liegen.

11. Antriebsvorrichtung nach den Ansprüchen 1 und 2, **dadurch gekennzeichnet, dass** die Lamellenkupplungen (14, 16) radial außerhalb des Achsdifferenziales (12) positioniert sind.

12. Antriebsvorrichtung nach Anspruch 11, **dadurch gekennzeichnet, dass** das innerhalb der beiden Lamellenkupplungen (14, 16) positionierte Achsdifferenzial (12) ein Kegelraddifferenzial ist.

13. Antriebsvorrichtung nach Anspruch 11 oder Anspruch 12, **dadurch gekennzeichnet, dass** die Lamellen (44) der beiden Lamellenkupplungen (14, 16) in einem gemeinsamen äußeren und angetriebenen Gehäuse (28) positioniert sind und dass zwei radial innere Abtriebshülsen (30, 32) als Lamellenträger vorgesehen sind, von denen eine fest mit dem Ausgleichsgehäuse (34) des Achsdifferenziales (12) und die andere mit einem außerhalb des Gehäuses (28) liegendem Abtriebszahnrad (24) zum Antrieb des zweiten Achsdifferenziales verbunden ist.

14. Antriebsvorrichtung nach Anspruch 12 oder Anspruch 13, **dadurch gekennzeichnet, dass** das Ausgleichsgehäuse (34) des Kegelraddifferenziales (12) und die Abtriebshülse (32b) der einen Lamellenkupplung (16) im äußeren Gehäuse (28) der Lamellenkupplungen (14, 16) drehbar gelagert sind.

15. Antriebsvorrichtung nach Anspruch 1, **dadurch gekennzeichnet, dass** die Lamellen (44) der Lamellenkupplungen (104, 106) in Achsrichtung gesehen unmittelbar seitlich neben dem Achsdifferenzial (102) angeordnet sind.

16. Antriebsvorrichtung nach Anspruch 15, **dadurch gekennzeichnet, dass** das Achsdifferenzial ein vorzugsweise gekapseltes Planetenraddifferenzial (102) oder Kronraddifferenzial ist.

17. Antriebsvorrichtung nach Anspruch 16, **dadurch gekennzeichnet,**
**dass** die Lamellen (44) der Lamellenkupplungen (104, 106) in einem gemeinsamen Gehäuse (112) angeordnet sind, und
**dass** zwei radial innere, einen Teil der Lamellen tragende Abtriebshülsen (114, 116) vorgesehen sind, von denen eine mit dem Planetenrad- oder Kronraddifferenzial (102) und die andere mit einem außerhalb des Gehäuses (112) liegenden Abtriebszahnrad (24) zum Antrieb des zweiten Achsdifferenziales verbunden ist.

18. Antriebsvorrichtung nach einem der vorhergehenden Ansprüche, **dadurch gekennzeichnet, dass** den Lamellenkupplungen (14, 16; 64, 66; 104, 106) eine Kupplungsbetätigungsvorrichtung (50; 90; 124), vorzugsweise eine hydraulisch oder elektromechanisch betätigbare Anpressvorrichtung, zugeordnet ist.

19. Antriebsvorrichtung nach Anspruch 18, **dadurch gekennzeichnet, dass** die Kupplungsbetätigungsvorrichtung (50; 124) Mittel (136), vorzugsweise in der Lamellenverzahnung angeordnete Stifte, aufweist, die bei einer Betätigung der Kupplungsbetätigungsvorrichtung ein Federelement (46; 120) einer ersten Kupplung (14, 104), mit der diese zur Übertragung eines Mindestabtriebsmomentes federnd vorgespannt ist, zurückdrückt und damit die erste Kupplung (14, 104) in vorgegebenem Maße öffnet, während durch die Betätigung der Kupplungsbetätigungsvorrichtung (50; 124) gleichzeitig die zweite Kupplung (16; 106) in vorgegebenem Maße schließt.

20. Antriebsvorrichtung nach Anspruch 18 oder Anspruch 19, **dadurch gekennzeichnet, dass** außerhalb oder in einem die Lamellenkupplungen aufnehmendem Gehäuse (28; 70; 112) zumindest eine Anpressvorrichtung (50; 90; 124) als Kupplungsbetätigungsvorrichtung zum Anpressen der Lamellen (44) der Lamellenkupplungen (14, 16; 64, 66; 104, 106) vorgesehen ist.

21. Antriebsvorrichtung nach Anspruch 20, **dadurch gekennzeichnet, dass** die außerhalb des Gehäuses (70; 112) liegende Anpressvorrichtung (90; 124) ein vorzugsweise durch ein Wälzlager gebildetes Ausrücklager (132) aufweist, über das die Anpresskraft auf die Lamellen (44) aufbringbar ist.

22. Antriebsvorrichtung nach Anspruch 21, **dadurch gekennzeichnet,**
**dass** die Anpressvorrichtung (124) eine Hebel- und/oder Rampenscheibenanordnung (126) aufweist, mittels der das Ausrücklager (132) mit einer vorgegebenen Anpresskraft beaufschlagbar ist, und
**dass** die Hebel- und/oder Rampenscheibenanordnung (126) bevorzugt an einer Lagerschale eines weiteren Wälzlagers (130) abgestützt ist.

23. Antriebsvorrichtung nach einem oder mehreren der vorhergehenden Ansprüche, **dadurch gekennzeichnet, dass** in dem die Lamellenkupplung aufweisenden, äußeren Gehäuse (28; 70) zumindest ein Ringkolben (50) als Kupplungsbetätigungsvorrichtung zum Anpressen der Lamellen (44) der Lamellenkupplungen (14, 16; 64, 66) axial verschiebbar gelagert ist.

## Claims

1. Drive system for all wheel drive motor vehicles having a first axle differential, a second axle differential and an intermediate axle differential by means of which the drive torque can be distributed to the axle differentials, the one axle differential and the intermediate axle differential being assembled together as a mounting unit, and the intermediate axle differential being formed by two neighbouring multi disk clutches (14, 16; 64, 66; 104, 106) whose transmission torque is variably controlled, **characterised in that** the one axle differential and the two multi disk clutches (14, 16; 64, 66; 104, 106) are arranged coaxially with respect to one another.

2. Drive system according to claim 1, **characterised in that** the multi disk clutch (14, 16; 64, 66) is arranged essentially in a uniform rotational plane with the axle differential (12; 62).

3. Drive system according to claims 1 and 2, **characterised in that** the multi disk clutches (64, 66) are arranged radially interiorly of the axle differential (62).

4. Drive system according to one of the preceding claims, **characterised in that** the axle differential (62) is a crown wheel differential whose planet wheels (78) mesh radially, exteriorly of the clutch housing (70), with crown gear wheels (80, 82) formed on output flanges (84, 86).

5. Drive system according to claim 4, **characterised in that** the output flanges (84, 86) are arranged directly neighbouring one another, the annular collars (84a, 86a) that carry the crown gear wheels (80, 82) being aligned radially over one another and the outer annular collar (84a) projecting beyond the inner annular collar (86a) such that diametrically opposed gear tooth engagement with the planet wheels (78) is achieved.

6. Drive system according to claim 4 or claim 5, **characterised in that** the disks (44) of the two multi disk clutches (64, 66) are located in a common exterior and driven housing (70), and **in that** two radially interior output sleeves (72, 88) are provided as disk carriers, of which one is connected fast with the differential body (74) of the axle differential (62) and the other is connected fast with an output gear wheel (24) disposed exteriorly of the housing (70) for driving the second axle differential.

7. Drive system according to claim 6, **characterised in that** the planet wheel carrier (74) which receives the planet wheels (78) of the crown wheel differential (62) to one side passes around the interiorly disposed housing (70) of the multi disk clutches (64, 66) and is connected fast with the one output sleeve (72) of the multi disk clutches (64, 66).

8. Drive system according to claim 6 or claim 7, **characterised in that** the second output sleeve (88) of the multi disk clutches (64, 66) has a section (88a) of the same diameter which extends outwardly from the housing (70) and is connected fast with the output gear wheel (24) for driving the second axle differential.

9. Drive system according to one of claims 4 to 8, **characterised in that** the output flanges (84, 86) of the crown wheel differential (62) move in contact with one another, radially and/or axially, by way of plain bearing regions (84b, 86b), such that upon relative rotation there is a viscous inhibiting action.

10. Drive system according to one of claims 6 to 9, **characterised in that** the input drive gear wheel (68), connected fast with the radially interiorly disposed housing (70) of the multi disk clutches (64, 66), is itself made pot shaped and is arranged such that the planet wheels (78) of the crown wheel differential (62) are disposed essentially interiorly of the input drive gear wheel (68).

11. Drive system according to claims 1 and 2, **characterised in that** the multi disk clutches (14, 16) are located radially exteriorly of the axle differential (12).

12. Drive system according to claim 11, **characterised in that** the axle differential (12) which is located interiorly of the two multi disk clutches (14, 16) is a bevel wheel differential.

13. Drive system according to claim 11 or claim 12, **characterised in that** the disks (44) of the two multi disk clutches (14, 16) are located in a common exterior and driven housing (28) and **in that** two radially interior output sleeves (30, 32) are provided as disk carriers of which one is connected fast with the differential body (34) of the axle differential (12) and the other is connected fast with an output gear wheel (24) disposed exteriorly of the housing (28) for driving the second axle differential.

14. Drive system according to claim 12 or claim 13, **characterised in that** the differential body (34) of the bevel wheel differential (12) and the output sleeve (32b) of the one multi disk clutch (14) are mounted for rotation in the exterior housing (28) of the multi disk clutches (14, 16).

15. Drive system according to claim 1, **characterised in that** the disks (44) of the multi disk clutches (104, 106) are arranged, as seen in the axial direction, to the side of, directly next to, the axle differential (102).

16. Drive system according to claim 15, **characterised in that** the axle differential is a, preferably enclosed, planet wheel differential (102) or crown wheel differential.

17. Drive system according to claim 16, **characterised in that** the disks (44) of the multi disk clutches (104, 106) are arranged in a common housing (112) and **in that** two radially interior output sleeves (114, 116), carrying part of the disks, are provided, of which one is connected with the planet wheel differential or crown wheel differential (102) and the other is connected with an output gear wheel (24) disposed exteriorly of the housing (112) for driving the second axle differential.

18. Drive system according to one of the preceding claims, **characterised in that** the multi disk clutches (14, 16; 64, 66; 104, 106) have associated with them a clutch actuating device (50; 90; 124), preferably an appressing device which can be actuated hydraulically or electro-mechanically.

19. Drive system according to claim 18, **characterised in that** the clutch actuating device (50; 124) has means (136), preferably pins arranged in the denticulation of the disks, which upon actuation of the clutch actuating device presses backwards a spring member (46; 120) of a first clutch (14, 104), the spring member (46; 120) resiliently preloading the first clutch (14, 104) for transmission of a minimum output torque, and actuation of the clutch actuating device opening the first clutch (14, 104) to a predetermined extent, whilst simultaneously, by reason of actuation of the clutch actuating device (50; 124), the second clutch (16; 106) closes to a predetermined extent.

20. Drive system according to claim 18 or claim 19, **characterised in that** there is provided, exteriorly of or in a housing (28; 70; 112) that receives the multi disk clutches, at least one appressing device (50; 90; 124) as clutch actuating device for appressing the disks (44) of the multi disk clutches (14, 16; 64, 66; 104, 106).

21. Drive system according to claim 20, **characterised in that** the appressing device (90, 124) which is disposed exteriorly of the housing (70; 112) has a release bearing (132), preferably formed by an anti friction bearing, by means of which the pressure can be applied to the disks (44).

22. Drive system according to claim 21, **characterised in that** the appressing device (124) has a lever and/or ramp disk arrangement (126) by means of which the release bearing (132) can be acted upon with a predetermined pressure, and **in that** the lever and/or ramp disk arrangement (126) is preferably supported from a bearing shell of a further anti friction bearing (130).

23. Drive system according to one of more of the preceding claims, **characterised in that** at least one annular piston (50) is mounted for axial displacement in the exterior housing (28; 70) which has the multi disk clutch, the annular piston (50) being the clutch actuating device for appressing the disks (44) of the multi disk clutches (14, 16; 64, 66).

## Revendications

1. Dispositif de propulsion pour des véhicules automobiles à quatre roues motrices avec un premier différentiel d'essieu, un second différentiel d'essieu et un différentiel d'essieu intermédiaire, par lequel le couple moteur peut être réparti sur les différentiels d'essieu, dans lequel un différentiel d'essieu et le différentiel d'essieu intermédiaire sont assemblés pour former une unité de montage et le différentiel d'essieu intermédiaire est formé de deux embrayages à disques multiples (14, 16 ; 64, 66 ; 104, 106) contigus, dont le couple de transmission peut être commandé de manière variable, **caractérisé en ce qu'**un différentiel d'essieu et les deux embrayages à disques multiples (14, 16 ; 64, 66 ; 104, 106) sont disposés coaxialement les uns par rapport aux autres.

2. Dispositif de propulsion selon la revendication 1, **caractérisé en ce que** l'embrayage à disques multiples (14, 16 ; 64, 66) est disposé essentiellement dans un plan de rotation uniforme avec le différentiel d'essieu (12 ; 62).

3. Dispositif de propulsion selon les revendications 1 et 2, **caractérisé en ce que** les embrayages à disques multiples (64, 66) sont disposés radialement à l'intérieur du différentiel d'essieu (62).

4. Dispositif de propulsion selon l'une quelconque des revendications précédentes, **caractérisé en ce que** le différentiel d'essieu (62) est un différentiel à roue de couronne, dont les roues planétaires (78) s'engrènent radialement à l'extérieur du carter d'embrayage (70) avec des roues dentées de couronne (80, 82) réalisées sur des brides de sortie (84, 86).

5. Dispositif de propulsion selon la revendication 4, **caractérisé en ce que** les brides de sortie (84, 86) sont disposées immédiatement contiguës, leurs collets annulaires (84a, 86a) portant les roues dentées de couronne (80, 82) étant alignés radialement les uns sur les autres et le collet annulaire (84a) extérieur dépassant le collet annulaire (86a) intérieur de sorte que des engrènements diamétralement opposés soient obtenus sur les roues planétaires (78.

6. Dispositif de propulsion selon la revendication 4 ou 5, **caractérisé en ce que** les disques (44) des deux embrayages à disques multiples (64, 66) sont positionnés dans un boîtier extérieur, commun et entraîné et **en ce que** deux douilles de sortie (72, 88) radialement intérieures sont prévues comme porte-disques, dont une est reliée de manière fixe au boîtier de différentiel (74) du différentiel d'essieu (62) et l'autre à une roue dentée de sortie (24) se trouvant hors du boîtier (70) pour l'entraînement du second différentiel d'essieu.

7. Dispositif de propulsion selon la revendication 6, **caractérisé en ce que** le porte-planetaire (74) recevant les roues planétaires (78) est guidé d'une part autour du boîtier (70) intérieur des embrayages à disques multiples (64, 66) et est relié de manière fixe à une douille de sortie (72) des embrayages à disques multiples (64, 66).

8. Dispositif de propulsion selon la revendication 6 ou 7, **caractérisé en ce que** la seconde douille de sortie (88) des embrayages à disques multiples (64, 66) présente une section (88a) retirée du boîtier (70) de diamètre identique qui est reliée fermement à la roue dentée de sortie (24) pour l'entraînement du second différentiel d'essieu.

9. Dispositif de propulsion selon l'une quelconque des revendications 4 à 8, **caractérisé en ce que** les brides de sortie (84, 86) du différentiel à roue de couronne (62) s'adossent radialement et/ou axialement l'une sur l'autre sur des zones de paliers lisses (84b, 86b) de sorte qu'en cas de régimes relatifs, un effet de blocage visqueux survienne.

10. Dispositif de propulsion selon l'une quelconque des revendications 6 à 9, **caractérisé en ce que** la roue dentée motrice (68) fermement reliée au boîtier (70)se trouvant radialement à l'intérieur des embrayages à disques multiples (64, 66) est réalisée en forme de pot et disposée de sorte que les roues planétaires (78) du différentiel à roue à couronne (62) se trouvent essentiellement à l'intérieur de la roue dentée motrice (68).

11. Dispositif de propulsion selon les revendications 1 et 2, **caractérisé en ce que** les embrayages à disques multiples (14, 16) sont positionnés radialement à l'extérieur du différentiel d'essieu (12).

12. Dispositif de propulsion selon la revendication 11, **caractérisé en ce que** le différentiel d'essieu (12) positionné à l'intérieur des deux embrayages à disques multiples (14, 16) est un différentiel à roue conique.

13. Dispositif de propulsion selon la revendication 11 ou 12, **caractérisé en ce que** les disques (44) des deux embrayages à disques multiples (14, 16) sont positionnés dans un boîtier (28) extérieur, commun et entraîné et **en ce que** deux douilles de sortie (30, 32) radialement intérieures sont prévues comme porte-disques, dont une est reliée fermement au boîtier de différentiel (34) du différentiel d'essieu (12) et l'autre à une roue dentée de sortie (24) se trouvant en dehors du boîtier (28) pour l'entraînement du second différentiel d'essieu.

14. Dispositif de propulsion selon la revendication 12 ou 13, **caractérisé en ce que** le boîtier de différentiel (34) du différentiel à roue conique (12) et la douille de sortie (32b)de l'un des embrayages à disques multiples (16) sont logés à rotation dans le boîtier (28) extérieur des embrayages à disques multiples (14, 16).

15. Dispositif de propulsion selon la revendication 1, **caractérisé en ce que** les disques (44) des embrayages à disques multiples (104, 106) sont disposés vu dans le sens d'essieu directement à côté du différentiel d'essieu (102).

16. Dispositif de propulsion selon la revendication 15, **caractérisé en ce que** le différentiel d'essieu est un différentiel à roue planétaire (102) de préférence blindé ou différentiel à roue de couronne.

17. Dispositif de propulsion selon la revendication 16, **caractérisé en ce**
**que** les disques (44) des embrayages à disques multiples (104, 106) sont disposés dans un boîtier commun (112), et
en ce que deux douilles de sortie (114, 116) radialement intérieures, portant une partie des disques, sont prévues dont une est reliée au différentiel à roue planétaire ou roue de couronne (102) et l'autre à une roue dentée de sortie (24) se trouvant en dehors du boîtier (112) pour l'entraînement du second différentiel d'essieu.

18. Dispositif de propulsion selon l'une quelconque des revendications précédentes, **caractérisé en ce qu'**un dispositif d'actionnement d'embrayage (50 ; 90 ; 124) de préférence un dispositif de serrage actionnable hydrauliquement ou électromécaniquement, est associé aux embrayages à disques multiples (14, 16 ; 64, 66 ; 104, 106).

19. Dispositif de propulsion selon la revendication 18, **caractérisé en ce que** le dispositif d'actionnement d'embrayage (50 ; 124) présente des moyens (136) de préférence des goupilles disposées dans la denture de disques, qui repousse lors d'un actionnement du dispositif d'actionnement d'embrayage un élément de ressort (46 ; 120) d'un premier embrayage (14, 104), avec lequel celui-ci est précontraint élastiquement pour la transmission d'un couple de sortie minimal et ainsi ouvre le premier embrayage (14, 104) dans une mesure prescrite, alors qu'il ferme en même temps le second embrayage (16 ; 106) par l'actionnement du dispositif d'actionnement d'embrayage (50 ; 124) dans une mesure prescrite.

20. Dispositif de propulsion selon la revendication 18 ou 19, **caractérisé en ce qu'**en dehors ou dans un boîtier (28 ; 70 ; 112) recevant les embrayages à disques multiples est prévu au moins un dispositif de serrage (50 ; 90 ; 124) comme dispositif d'actionnement d'embrayage pour le serrage des disques (44) des embrayages à disques multiples (14, 16 ; 64, 66 ; 104, 106).

21. Dispositif de propulsion selon la revendication 20, **caractérisé en ce que** le dispositif de serrage (90 ; 124) se trouvant en dehors du boîtier (70 ; 112) présente un palier de débrayage (132) formé de préférence par un palier à roulement, par lequel la force de serrage peut être appliquée sur les disques (44).

22. Dispositif de propulsion selon la revendication 21, **caractérisé en ce**
**que** le dispositif de serrage (124) présente un agencement de leviers et/ou de disques à rampe (126), au moyen duquel le palier de débrayage (132) peut être sollicité en une force de serrage prescrite, et
en ce que l'agencement de leviers et/ou de disques à rampe (126) est appuyé de préférence contre un coussinet de palier d'un autre palier à roulement (130).

23. Dispositif de propulsion selon l'une ou plusieurs quelconques des revendications précédentes, **caractérisé en ce que** dans le boîtier (28 ; 70) extérieur, présentant l'embrayage à disques multiples est logé axialement coulissant au moins un piston annulaire (50) comme dispositif d'actionnement d'embrayage pour le serrage des disques (44) des embrayages à disques multiples (14, 16 ; 64, 66.
